# EUROPEAN PATENT APPLICATION

(11) **EP 3 978 262 A1**
(43) Date of publication of application: **06.04.2022**
(21) Application number: 21153466.4
(22) Date of filing: 26.01.2021
(51) Int. Cl.: B44C 1/00, C03C 17/00, G06F 1/16

(54) **CURVED STRUCTURE AND MANUFACTURING METHOD THEREOF, AND DISPLAY DEVICE**

(30) Priority: 30.09.2020 CN 202011062431; 04.12.2020 CN 202011412100
(71) Applicant: TPK Touch Solutions (Xiamen) Inc., Xiamen, Fujian 361009 (CN)
(72) Inventor: LI, Rong Hua, Xiamen City, Fujian (CN); HE, YAN FEI, Ganzhou City, Jiangxi (CN); LIN, XIA, Longyan City, Fujian (CN); ZENG, DING GUI, Xiamen, Fujian (CN); PENG, SSU-YEN, Zhudong Town, Hsinchu County (TW)
(74) Representative: Goddar, Heinz J.

(57) **Abstract**

A curved structure, a manufacturing method thereof, and a display device are provided. The curved structure includes a curved substrate, a flexible substrate, and a decoration layer. The decoration layer is located between the flexible substrate and the curved substrate. The configuration of the decoration layer can solve the problem of the uncontrollable thickness of the decoration layer formed on the curved substrate by printing.

## Description

### CROSS REFERENCE TO RELATED APPLICATIONS

This Non-provisional application claims priority under 35 U.S.C. §119(a) to Patent Application No(s). 202011062431.2, filed in People's Republic of China on September 30, 2020, the entire contents of which are hereby incorporated by reference.

### BACKGROUND

### Technology Field

This disclosure relates to a curved structure and, in particular, to a curved structure, a manufacturing method thereof, and a display device.

### Description of Related Art

With the development and advancement of science and technology, touch interface technology is applied to more and more fields, such as mobile phones, tablet computers, industrial control screens, vehicle instrument displays, or central control entertainment systems. Nowadays, the touch panel is mainly configured with a flat protection cover. In the existing manufacturing process of touch panels, a decoration layer for light-shielding and a functional layer (e.g., an anti-reflection film) are generally formed on the protection cover (e.g., a glass cover), and then the protection cover is attached to the touch panel to conceal, for example, the circuits or components in the peripheral area of the touch panel by the decoration layer. In addition, the functional layer can provide the protection cover with specific optical characteristics.

Conventionally, the decoration layer and the functional layer are generally configured on a flat protection cover. However, with the development of touch technology, the design of touch panels has become more technological, wider applications, and larger sizes. Moreover, the appearances of the touch panels have many different designs, such as the different shapes of curved covers (e.g., V-shaped screens, S-shaped screens, or multi-axis curved screens).

In the conventional art, the following methods are used to provide a decoration layer on the curved cover. The first method is to form an ink film and cut the ink film into the appropriate size as required, and then to attach the ink film to the curved inner surface of the curved cover (i.e., the inner surface of the curved cover facing the display panel) by optical glue. However, this method requires a jig to fix the ink film to the inner surface of the curved cover, and this process is complicated. The second method is to process the flexible substrate into a certain curved shape, and then to attach the flexible substrate to the curved cover. However, an additional process is needed to fix the shape of the flexible substrate, and the manufacturing process thereof is also complicated. The third method is to attach the flexible film to the inner curved surface of the curved cover. Because the inner curved surface of the curved cover is facing downwardly, it is still necessary to fix the flexible film with a jig to adhere the flexible film to the inner curved surface of the curved cover. This process is not beneficial to the adhesion of the flexible film, the yield rate is reduced, and the cost is high.

In addition to the above, the conventional process for forming the decoration layer and the functional layer on the curved cover will mainly cause the following two problems. 1. If the decoration layer is directly formed (e.g., by printing) on the curved cover, the thickness of the ink is often uneven. Moreover, the printing process for forming the decoration layer cannot be applied to a cover with a larger radius of curvature. 2. The optical film coating process of the curved cover will also encounter a chromatic aberration problem. For example, when forming an anti-reflection film on the surface of the curved glass cover, the formed anti-reflection film will be non-uniform in different positions, which will cause the chromatic aberration phenomenon.

### SUMMARY

In view of the foregoing, the present disclosure provides a curved structure, a manufacturing method thereof, and a display device that can solve the problem of the uncontrollable thickness of the decoration layer formed on the curved substrate by printing.

To achieve the above, a curved structure comprises a curved substrate, a flexible substrate, and a decoration layer. The decoration layer is located between the flexible substrate and the curved substrate.

In one embodiment, the curved substrate has an inner surface and an outer surface corresponding to the inner surface, and the flexible substrate is disposed on the outer surface. The decoration layer is located on a second area of the flexible substrate, and an area of the flexible substrate other than the second area is defined as a first area. The thickness of the decoration layer is greater than or equal to 5 µm and is less than or equal to 10 µm. The reflectivity of the first area is between 0.3% and 2%, and the reflectivity of the second area is between 0.5% and 2.5%.

In one embodiment, the flexible substrate is a PMMA (polymethyl methacrylate) substrate, a PET (polyethylene terephthalate) substrate, a TAC (triacetyl cellulose) substrate, or a SRF (super retardation film).

In one embodiment, the curved structure further comprises a functional layer disposed on a surface of the flexible substrate away from the decoration layer. The functional layer is an anti-glare film, an anti-reflection film, an anti-finger printing film, a waterproof and anti-fouling film, or an anti-scratch film.

In one embodiment, the curved structure further comprises a second adhesion layer disposed between the flexible substrate and the curved substrate, and the thickness of the second adhesion layer is greater than or equal to 25 µm and is less than or equal to 150 µm.

In one embodiment, the curved substrate is a C-shaped curved substrate, an S-shaped curved substrate, a V-shaped curved substrate, a Z-shaped curved substrate, or a J-type curved substrate, and the radius of curvature of the curved substrate is greater than or equal to 10 mm.

To achieve the above, a display device comprises a display module, a curved structure, and a first adhesion layer. The curved structure is disposed on the display module. The curved structure comprises a curved substrate, a flexible substrate, and a decoration layer, and the decoration layer is located between the flexible substrate and the curved substrate. The first adhesion layer is disposed between the display module and the curved structure.

In one embodiment, the display device further comprises a touch pattern layer disposed on a surface of the curved substrate facing the display module.

In one embodiment, the display module comprises a touch panel and a display panel, and the touch panel is disposed between the curved structure and the display panel.

In one embodiment, the curved structure further comprises a functional layer disposed on a surface of the flexible substrate away from the decoration layer. The curved structure further comprises a second adhesion layer disposed between the flexible substrate and the curved substrate. The second adhesion layer covers parts of surfaces of the decoration layer and the flexible substrate. The thickness of the second adhesion layer is greater than or equal to 25 µm and is less than or equal to 150 µm. The display module is an LCD (liquid crystal display) module or an EL (electroluminescence) display panel.

To achieve the above, a manufacturing method of a curved structure comprises the following steps of: providing a flexible substrate and forming a decoration layer on the flexible substrate; and providing a curved substrate and disposing the flexible substrate on the curved substrate, wherein the decoration layer is located between the flexible substrate and the curved substrate.

In one embodiment, the decoration layer is formed by screen printing, spraying, or transferring. The decoration layer further comprises a plurality of adjacent patterns. In the step of forming the decoration layer, a baking temperature is between 80 °C and 120 °C. In the step of disposing the flexible substrate on the curved substrate, the flexible substrate is attached to the curved substrate by a roller process.

As mentioned above, in the curved structure, the manufacturing method thereof, and the display device of this disclosure, a decoration layer is formed on the flexible substrate, and the flexible substrate is disposed on the curved substrate, so that the decoration layer can be located between the flexible substrate and the curved substrate. Compared with the conventional art, the curved structure, the manufacturing method thereof, and the display device of this disclosure can solve the problem of the uncontrollable thickness of the decoration layer formed on the curved substrate by printing.

In one embodiment of this disclosure, the curved structure, the manufacturing method thereof, and the display device of this disclosure can further solve the chromatic aberration phenomenon caused by the non-uniform optical film formed on the curved substrate in the conventional art.

### BRIEF DESCRIPTION OF THE DRAWINGS

The disclosure will become more fully understood from the detailed description and accompanying drawings, which are given for illustration only, and thus are not limitative of the present disclosure, and wherein:
FIG. 1 is schematic diagram showing a curved structure according to an embodiment of this disclosure;
FIG. 2 is a schematic diagram showing the configuration of the flexible substrate and the decoration layer of the curved structure according to the embodiment of this disclosure;
FIGS. 3 to 5 are schematic diagrams showing display devices according to other embodiments of this disclosure;
FIG. 6 is a flow chart of a manufacturing method of a curved structure according to an embodiment of this disclosure; and
FIG. 7 is a schematic diagram showing the optical characteristics of the curved structure according to an embodiment of this disclosure.

### DETAILED DESCRIPTION OF THE DISCLOSURE

The present disclosure will be apparent from the following detailed description, which proceeds with reference to the accompanying drawings, wherein the same references relate to the same elements.

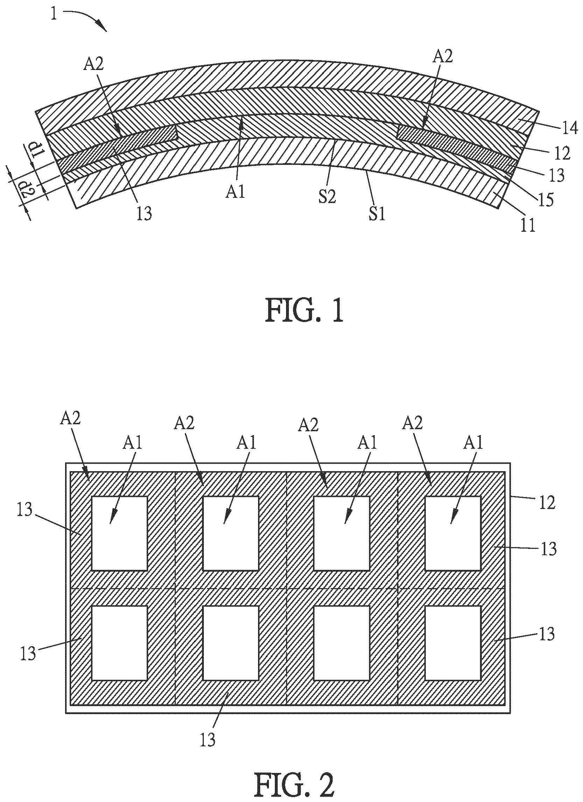

FIG. 1 is schematic diagram showing a curved structure 1 according to an embodiment of this disclosure. As shown in FIG. 1, the curved structure 1 comprises a curved substrate 11, a flexible substrate 12, and a decoration layer 13. In addition, the curved structure 1 of this embodiment can further comprise a functional layer 14 and an adhesion layer 15.

The curved substrate 11 can be a transparent glass cover or a transparent plastic cover. In this embodiment, the curved substrate 11 is disposed on a surface of the entire device or module facing the user for protecting the device or module. In some embodiments, the curved substrate 11 can be a C-shaped curved substrate, an S-shaped curved substrate, a V-shaped curved substrate, a Z-shaped curved substrate, a J-type curved substrate, or any of other types or shapes of curved substrates. In this embodiment, the curved substrate 11 is, for example, a C-shaped glass cover. In some embodiments, the thickness of the curved substrate 11 is at least 0.2 mm, and the radius of curvature (R) of the curved substrate 11 is greater than or equal to 10 mm (R ≥ 10mm), such as 10 mm, 12 mm, 15 mm, 20 mm, or 28 mm.

The curved substrate 11 is defined with an inner surface S1 and an outer surface S2, which is disposed corresponding to the inner surface S1. In this disclosure, the term "curved substrate" has a curved upper surface and a curved lower surface with respect to a flat substrate. That is, the inner surface S1 of the curved substrate 11 (the lower surface of the curved substrate 11 of FIG. 1) and the outer surface S2 of the curved substrate 11 (the upper surface of the curved substrate 11 of FIG. 1) are both curved surfaces. In addition, the curved upper surface and the curved lower surface can be curved upwardly or downwardly. For example, the curved substrate 11 as shown in FIG. 1 is curved downwardly. When the curved substrate 11 is assembled with the display module to form a display device, the display module is disposed adjacent to the inner surface S1, and the outer surface S2 of the curved substrate 11 is disposed away from the display module and close to the user or viewer. In other embodiments, the curved substrate 11 can be curved upwardly. Similarly, in these other embodiments, the display module is disposed adjacent to the inner surface S1, and the outer surface S2 of the curved substrate 11 is disposed away from the display module and close to the user or viewer.

The flexible substrate 12 is attached to and covering the curved substrate 11. In this disclosure, the "flexible substrate" is a substrate made of extendable, bendable, or twistable material, and the flexible substrate can keep the original material properties in a deformed state. Accordingly, the flexible substrate can also be referred to a soft substrate or bendable substrate. In this embodiment, the flexible substrate 12 is disposed on the outer surface S2 of the curved substrate 11. In addition, the flexible substrate 12 may comprise a first area A1 and a second area A2, and the second area A2 is located around the first area A1. In some embodiments, the second area A2 can be an annular area disposed around the periphery of the first area A1. In some embodiments, the second area A2 comprises a plurality of sub-areas disposed around the periphery of the first area A1. In this embodiment, the first area A1 is also referred to as a vision area (or display area), which is corresponding to the areas of the flexible substrate 12 and the curved substrate 11 that allow the light to pass through. The second area A2 can also be referred to as a peripheral area (non-display area), which is an annular area disposed around the periphery of the first area A1. In this case, the residual area of the surface (the lower surface of FIG. 1) of the flexible substrate 12 other than the second area A2 is defined as the first area A1.

In some embodiments, the flexible substrate 12 can be a PMMA (polymethyl methacrylate) substrate, a PET (polyethylene terephthalate) substrate, a TAC (triacetyl cellulose) substrate, a super retardation film (SRF), or any combinations thereof. In some embodiments, the thickness of the flexible substrate 12 is between 0.04 mm and 0.2 mm, and the material malleability thereof is within 0.1%. Accordingly, the flexible substrate 12 can have a good bending resistance, and thus the flexible substrate 12 can be applied to the various curved substrates 11 with different radiuses of curvature (e.g., the curved substrate 11 with a large radius of curvature). Since the radius of curvature (R) of the curved substrate 11 is greater than or equal to 10 mm (R ≥ 10 mm), the radius of curvature of the curved structure 1 is also greater than or equal to 10 mm.

The decoration layer 13 is disposed between the flexible substrate 12 and the curved substrate 11. In this embodiment, the decoration layer 13 is disposed on the second area A2 of the flexible substrate 12. The decoration layer 13 can be correspondingly disposed at, for example, the frame border of the display device or module for shielding the circuits or components on the non-display area (the peripheral area). The material of the decoration layer 13 can comprise low-temperature ink (e.g., black, gray, or white ink), which can be formed on (the second area A2 of) the lower surface of the flexible substrate 12 facing the curved substrate 11. In some embodiments, the thickness d1 of the decoration layer 13 can be greater than or equal to 5 µm and is less than or equal to 10 µm (5 µm ≤ d1 ≤ 10 µm).

FIG. 2 is a schematic diagram showing the configuration of the flexible substrate 12 and the decoration layer 13 of the curved structure 1 according to the embodiment of this disclosure. In this embodiment, FIG. 2 is the bottom view of the curved structure 1 (including the decoration layer 13 and the flexible substrate 12) of FIG. 1.

In some embodiments, in the process of forming the decoration layer 13 on the second area A2 of the flexible substrate 12, it is possible to print a set of decoration patterns or multiple sets of decoration patterns based on the process requirement. In other words, a set of decoration patterns can be printed on the flexible substrate 12 with the required dimension by one printing process; or multiple sets of decoration patterns can be printed on a large-scaled flexible substrate 12 by one printing process, so that the decoration layer 13 formed on the large-scaled flexible substrate 12 can comprise a plurality of adjacent decoration patterns. In the example as shown in FIG. 2, the decoration layer 13 comprises eight sets of decoration patterns (each decoration pattern is labeled by 13), and a cutting process is performed (cutting along the dotted lines) so as to obtain eight small-sized flexible substrates 12, each of which is configured with one set of decoration patterns (the decoration layer 13). This manufacturing method of printing multiple sets of decoration patterns on the large-scaled flexible substrate 12 and then cutting the large-scaled flexible substrate 12 can enable multiple flexible substrates 12 with the corresponding decoration layers 13 to be formed in one process (instead of printing the decoration patterns one by one), thereby increasing the manufacturing efficiency.

Referring to FIG. 1, the functional layer 14 is disposed on the surface of the flexible substrate 12 away from the decoration layer 13. In other words, in this embodiment, the functional layer 14 and the decoration layer 13 are disposed on two opposite surfaces of the flexible substrate 12, respectively, and the decoration layer 13 is located between the flexible substrate 12 and the curved substrate 11. The functional layer 14 is a transparent film such as, for example but not limitation, an anti-glare film, an anti-reflection film, an anti-finger printing film, a waterproof and anti-fouling film, an anti-scratch film, or any combination thereof. This disclosure is not limited.

In some embodiments, after forming the functional layer 14 and the decoration layer 13 on two opposite surfaces of the flexible substrate 12, the flexible substrate 12, along with the functional layer 14 and the decoration layer 13, is provided to cover the curved substrate 11. Therefore, the decoration layer 13 can be disposed between the flexible substrate 12 and the curved substrate 11. In order to firmly cover and attach the flexible substrate 12 on the curved substrate 11, the adhesion layer 15 is provided between the flexible substrate 12 and the curved substrate 11, so that the flexible substrate 12 can be attached to and covered on the curved substrate 11 through the adhesion layer 15. In this embodiment, the thickness d2 of the adhesion layer 15 can be greater than or equal to 25 µm and less than or equal to 150 µm (25 µm ≤ d2 ≤ 150 µm). The thickness d2 of the adhesion layer 15 is greater than the thickness d1 of the decoration layer 13. Accordingly, the adhesion layer 15 can totally cover the entire decoration layer 13 and further cover a part of the surface of the flexible substrate 12. This configuration can protect the decoration layer 13 from scratching by other objects. In some embodiments, the adhesion layer 15 can be an OCA (optical clear adhesive), an OCR (optical clear resin), or any of other transparent adhesion material.

To be noted, the flexible substrate 12 has the properties of being flexible and bendable, so that when the flexible substrate 12 is attached to the curved substrate 11, the flexible substrate 12 can be tightly attached to the curved substrate 11 through the adhesion layer 15. Accordingly, the decoration layer 13 can be disposed between the flexible substrate 12 and the curved substrate 11, and the flexible substrate 12 can be curved to fit the curved surface (the outer surface S2) of the curved substrate 11. As a result, the flexible substrate 12, the curved substrate 11, and the curved structure 1 substantially have the same curvature.

In the curved structure 1 of this embodiment, as viewing from the top of the curved structure 1 (viewing from the side of the flexible substrate 12 away from the curved substrate 11), the reflectivity of the first area A1 (the display area) is between 0.3% and 2% (0.3% ≤ reflectivity of first area A1 ≤ 2%), such as 0.3%, 0.8, 1.2%, 1.5%, 1.8, or 2.0%. In addition, the reflectivity of the second area A2 (the peripheral area) is between 0.5% and 2.5% (0.5% ≤ reflectivity of second area A2 ≤ 2.5%), such as 0.5%, 1.2%, 1.6%, 2.0%, 2.1%, or 2.4%. As used herein, "reflectivity" refers to a measure of the reflection of light having a wavelength between 450 nm and 650 nm. Accordingly, the curved structure 1 can meet or exceed the request specification.

To be noted, in some embodiments, in order to smoothly form the decoration layer 13 and the functional layer 14 on two opposite sides of the flexible substrate 12, respectively, the flexible substrate 12 can be disposed on a planar carrier, and then the decoration layer 13 and the functional layer 14 are formed on the planar flexible substrate 12 by printing and coating processes. Since the printing and coating processes are performed with the planar flexible substrate 12, and the flexible substrate 12 is then attached to the outer surface S2 of the curved substrate 11, the decoration layer 13 can be disposed between the flexible substrate 12 and the curved substrate 11. Accordingly, the ink thickness of the decoration layer 13 can be easily controlled in the manufacturing process (the reflectivity of the second area A2 can be controlled to be between 0.5% and 2.5%), thereby solving the problem of the uncontrollable thickness of the decoration layer formed on the curved substrate, the problem of forming the decoration layer by printing, and the chromatic aberration phenomenon caused by the non-uniform optical film formed on the curved substrate in the conventional art.

Moreover, in this embodiment, the flexible substrate 12 is directly attached to the outer surface S2 of the curved substrate 11 by utilizing the adhesion layer 15, which is much easier. Compared with the conventional art, which utilizes the jig to fix the flexible substrate before attaching the flexible substrate on the inner curved surface of the curved cover, this embodiment does not need to prepare the jig for fixing the flexible substrate on the inner curved surface, so that the manufacturing method of this embodiment is easier and can sufficiently increase the manufacturing yield and decrease the manufacturing cost.

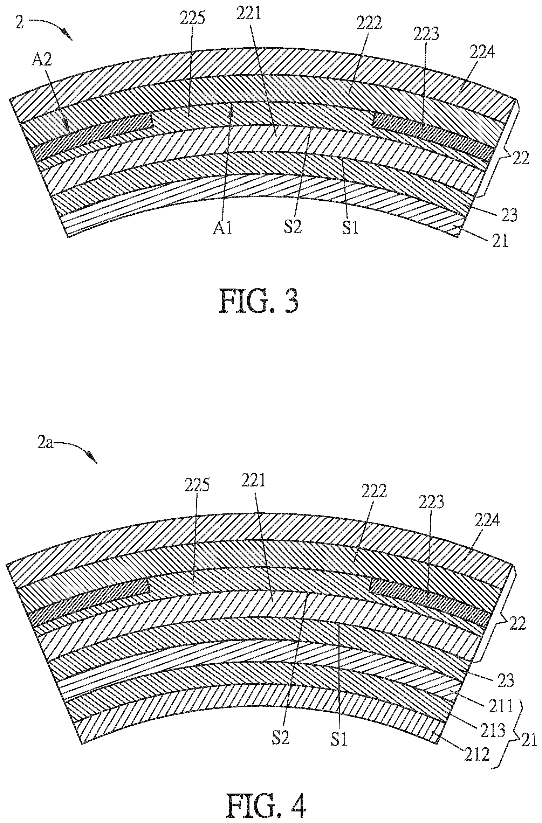

FIGS. 3 to 5 are schematic diagrams showing display devices according to other embodiments of this disclosure. As shown in FIG. 3, the display device 2 of this embodiment comprises a display module 21, a curved structure 22, and a first adhesion layer 23. The curved structure 22 is disposed on the display module 21, and the first adhesion layer 23 is disposed between the display module 21 and the curved structure 22. In this embodiment, the curved structure 22 is attached to the display module 21 through the first adhesion layer 23 for protecting the display module 21 and preventing the entrance of dusts or moisture, which may damage the properties of the display module 21.

In this embodiment, the display module 21 can be a liquid crystal display (LCD) module or an electroluminescence (EL) display panel. The LCD module comprises an LCD panel such as an FFS (Fringe Field Switching) type LCD panel, an IPS (In Plane Switching) type LCD panel, a TN (Twisted Nematic) type LCD panel, a VA (Vertical Alignment) type LCD panel, or any of other types of LCD panels. In addition, the EL display panel can be an LED (Light-Emitting Diode) display panel, an OLED (Organic Light-Emitting Diode) display panel, or a µLED (Micro Light-Emitting Diode) display panel.

The curved structure 22 comprises a transparent glass cover or a transparent plastic cover and is configured to protect the display module 21. In this embodiment, the curved structure 22 comprises a curved substrate 221, a flexible substrate 222, and a decoration layer 223. The flexible substrate 222 covers the curved substrate 221. The curved substrate 221 has an inner surface S1 and an outer surface S2, which is disposed corresponding to the inner surface S1. The inner surface S1 is the surface of the curved substrate 221 facing the display module 21, the flexible substrate 222 is disposed adjacent to the outer surface S2 of the curved substrate 221, and the decoration layer 223 is disposed between the flexible substrate 222 and the curved substrate 221. In addition, the flexible substrate 222 comprises a first area A1 and a second area A2, and the second area A2 is located around the first area A1. In other words, the part of the lower surface of the flexible substrate 222 facing the curved substrate 221 other than the second area A2 is all defined as the first area A1. The decoration layer 223 is disposed on the second area A2 of the flexible substrate 222. In this embodiment, the reflectivity of the first area A1 of the flexible substrate 222 is between 0.3% and 2%, and the reflectivity of the second area A2 of the flexible substrate 222 is between 0.5% and 2.5%. This configuration can obtain the curved structure 22 that meets or exceeds the request specification.

In addition, the curved structure 22 can further comprise a functional layer 224 and a second adhesion layer 225. The functional layer 224 is disposed on a surface of the flexible substrate 222 away from the decoration layer 223. In this embodiment, the functional layer 224 and the decoration layer 223 are disposed on two opposite surfaces of the flexible substrate 222, respectively, and the decoration layer 223 is located between the flexible substrate 222 and the curved substrate 221. In addition, the second adhesion layer 225 is disposed between the flexible substrate 222 and the curved substrate 221. In this embodiment, the second adhesion layer 225 can be equivalent to the adhesion layer 15 of the above-mentioned curved structure 1. Accordingly, the adhesion layer 15 of FIG. 1 can also be referred to as a "second" adhesion layer. The second adhesion layer 225 covers parts of the surfaces of the decoration layer 223 and the flexible substrate 222, and the thickness of the second adhesion layer 225 is greater than the thickness of the decoration layer 223. This configuration can protect the decoration layer 223 and prevent the scratching of the decoration layer 223.

To be noted, the curved structure 22 of this embodiment can comprise all technical contents of the above-mentioned curved structure 1 and any modification thereof, and the specific contents can refer to the same components of the curved structure 1, so the detailed descriptions thereof will be omitted.

As shown in FIG. 4, the configuration and connection of the components of the display device 2a of this embodiment are mostly the same as those of the display device 2 of the previous embodiment. Different from the previous embodiment, in the display device 2a of this embodiment, the display module 21 comprises a touch panel 211, a display panel 212, and a third adhesion layer 213, and the touch panel 211 is disposed between the curved structure 22 and the display panel 212. The touch panel 211 is connected to the display panel 212 through the third adhesion layer 213, and the curved structure 22 is connected to the touch panel 211 through the first adhesion layer 23. In some embodiments, the touch panel 211 comprises a substrate and a touch pattern layer, and the touch pattern layer is disposed on the substrate. The touch pattern layer can construct the touch sensing circuit (i.e., the driving electrodes Tx and the sensing electrodes Rx) for sensing the touch position of the user, so that the display device 2a can be an out-cell curved touch display device.

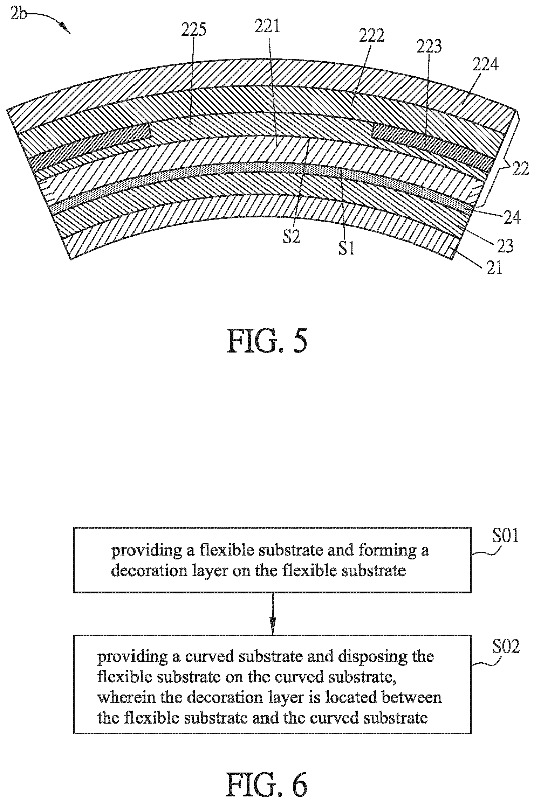

As shown in FIG. 5, the configuration and connection of the components of the display device 2b of this embodiment are mostly the same as those of the display devices 2 and 2a of the previous embodiments. Different from the previous embodiments, the display device 2b of this embodiment comprises a touch pattern layer 24 instead of the touch panel 211. The touch pattern layer 24 is disposed on a surface of the curved substrate 221 facing the display module 21, and the touch pattern layer 24 is connected to the display module 21 through the first adhesion layer 23. In this embodiment, the curved substrate 221 configured with the touch pattern layer 24 is used as the protection cover of the display module 21. Accordingly, the display device 2b can be an OGS (One Glass Solution) curved touch display device.

The other technical features of the display devices 2a and 2b can be referred to the same components of the display device 2 or the curved structure 1, so the detailed descriptions thereof will be omitted.

A manufacturing method of a curved structure will be described hereinafter with reference to FIG. 6 in view of FIG. 1, wherein FIG. 6 is a flow chart of a manufacturing method of a curved structure according to an embodiment of this disclosure. As shown in FIG. 6, the manufacturing method of a curved structure 1 comprises the following steps of: providing a flexible substrate and forming a decoration layer on the flexible substrate (step S01); and providing a curved substrate and disposing the flexible substrate on the curved substrate, wherein the decoration layer is located between the flexible substrate and the curved substrate (step S02).

Referring to FIG. 1, the step S01 is to provide a flexible substrate 12 and form a decoration layer 13 on the flexible substrate 12. Afterwards, the step S02 is to provide a curved substrate 11 and dispose the flexible substrate 12 on the curved substrate 11, wherein the decoration layer 13 is located between the flexible substrate 12 and the curved substrate 11. In some embodiments, the curved substrate 11 has an inner surface S1 and an outer surface S2, which is disposed corresponding to the inner surface S1. The inner surface S1 is the surface of the curved substrate 11 facing the display module or the display device, and the flexible substrate 12 is disposed adjacent to the outer surface S2 of the curved substrate 11. In addition, the surface of the flexible substrate 12 facing the curved substrate 11 comprises a first area A1 and a second area A2, and the second area A2 is located around the first area A1. The decoration layer 13 is disposed on the second area A2 of the flexible substrate 12. The reflectivity of the first area A1 is between 0.3% and 2%, and the reflectivity of the second area A2 is between 0.5% and 2.5%.

In some embodiments, in order to smoothly form the decoration layer 13 (or the functional layer 14) on the flexible substrate 12, the flexible substrate 12 can be disposed on a planar carrier (e.g., a glass substrate), and then the decoration layer 13 (or the functional layer 14) is formed on the planar flexible substrate 12 by a proper process. Then, the planar carrier is removed before performing the step of disposing the flexible substrate 12 on the curved substrate 11 (e.g., by attaching). In some embodiments, the decoration layer 13 can be formed on the second area A2 of the flexible substrate 12 by, for example, screen printing, spraying, transferring, or the likes. In addition, in order to form the decoration layer 13 on the flexible substrate 12 with a lower transition temperature (Tg), the decoration layer 13 can be formed by a low-temperature ink, which has a baking temperature, for example, between 80 °C and 120 °C, and the baking time is, for example, between 30 minutes and 45 minutes.

In the conventional art, a high-temperature ink is usually used to form the decoration layer on the glass cover. However, after the baking step to cure the ink on the glass cover (the baking temperature is, for example, 150-200 °C, and the baking time is, for example, 30-60 minutes), the cured ink may be separated from the glass cover. In this embodiment, the decoration layer 13 is formed by a low-temperature ink, which has good expressions in acid resistance, alkali resistance, light durability, washing durability, and wearing resistance. Accordingly, compared with the conventional art that utilizes the high-temperature to form the decoration layer on the glass cover, the curved structure 1 of this embodiment can have lower energy consumption and higher reliability.

In addition, since the low-temperature ink is directly formed on the surface of the flexible substrate 12, and the liquid ink (before curing) has good fluidity, the ink on the surface of the flexible substrate 12 can have high flatness, and the connection between the ink and the surface of the flexible substrate 12 is more tight. After the ink is cured (to form the decoration layer 13), as viewing the flexible substrate 12 and the decoration layer 13 from one side of the flexible substrate 12 away from the decoration layer 13 (the top side of FIG. 1 (i.e., the viewing side with respect to the viewer)), the glossiness of the ink on the junction between the flexible substrate 12 away from the decoration layer 13 is higher. The surface of the decoration layer 13 away from the flexible substrate 12 (the lower surface of the decoration layer 13 of FIG. 1) has a worse flatness than the other surface thereof facing the flexible substrate 12, so the optical effect of the junction between the flexible substrate 12 and the decoration layer 13 is different from the optical effect of the surface of the decoration layer 13 away from the flexible substrate 12. In other words, when the light is provided to the junction between the decoration layer 13 and the flexible substrate 12, a better optical effect can be obtained. Accordingly, in this embodiment, the flexible substrate 12 is disposed on the outer surface S2 of the curved substrate 11, and the decoration layer 13 is located between the flexible substrate 12 and the curved substrate 11, so that the manufacturing process thereof is easier. Moreover, when the viewer views from the top of the curved structure 1 of FIG. 1, a better optical effect can be obtained while the light is provided to the junction between the decoration layer 13 and the flexible substrate 12. Accordingly, the viewer can have a better visual experience.

In some embodiments, as shown in FIG. 2, the decoration layer 13 can comprise a plurality of adjacent patterns. Before the step of disposing the flexible substrate 12 on the curved substrate 11, the manufacturing method of this embodiment further comprises a step of: cutting the flexible substrate 12 configured with the decoration layer 13. In some embodiments, the flexible substrate 12 can be cut into any required shape by, for example, laser cutting or die cutting. In some embodiments, the cutting step can be performed after the step of disposing the flexible substrate 12 on the curved substrate 11 (step S02).

In addition, before the step S02, a functional layer 14 can be disposed on the surface of the flexible substrate 12 away from the decoration layer 13, so that the functional layer 14 and the decoration layer 13 are disposed on opposite surfaces of the flexible substrate 12, respectively. Since the functional layer 14 can also be formed in the coating process of the planar flexible substrate 12, the thickness of the functional layer 14 can be properly controlled, thereby properly controlling the optical characteristics of the functional layer 14 (e.g., color, reflectivity, or the likes).

In some embodiments, the step S02 of disposing the flexible substrate 12 on the curved substrate 11 can be performed by utilizing, for example, a roller attaching process to attach the adhesion layer 15 on the flexible substrate 12 (the adhesion layer 15 covers parts of surfaces of the decoration layer 13 and the flexible substrate 12), and then utilizing, for example, a roller process to attach and cover the flexible substrate 12 on the curved substrate 11 through the adhesion layer 15. Alternatively, the adhesion layer 15 can be disposed on the outer surface S2 of the curved substrate 11, and then a roller process is performed to attach the flexible substrate 12 on the outer surface S2 of the curved substrate 11, thereby disposing the decoration layer 13 between the flexible substrate 12 and the curved substrate 11. In this embodiment, for example, it is possible to control the direction of the roller to provide a uniform force to different positions on the curved substrate 11, so that there is no bubble being generated in the adhesion layer 15. Afterwards, high pressure and high temperature are provided to obtain a better adhesion between the flexible substrate 12 and the curved substrate 11. After the above-mentioned processes, in some embodiments, the reflectivity of the first area A1 is between 0.3% and 2%, and the reflectivity of the second area A2 is between 0.5% and 2.5%.

To be noted, in some embodiments, in the step of forming the decoration layer 13 on the flexible substrate 12 (S01), the flexible substrate 12 is disposed on, for example, a planar carrier, and then the decoration layer 13 is formed on the flexible substrate 12 disposed on the planar carrier. Afterwards, the flexible substrate 12 is formed on the curved substrate 11 by an attaching process. Accordingly, the thickness of ink for forming the decoration layer 13 can be easily controlled, so that the reflectivity of the first area A1 can be controlled between 0.3% and 2%, and the reflectivity of the second area A2 can be controlled between 0.5% and 2.5%. This configuration can solve the problem of the uncontrollable thickness of the decoration layer formed on the curved substrate, and the problem of forming the decoration layer by printing. In addition, in some embodiments, the functional layer 14 is formed on the surface of the flexible substrate 12 away from the decoration layer 13, while the flexible substrate 12 is disposed on a planar carrier. Accordingly, the chromatic aberration phenomenon caused by the non-uniform optical film formed on the curved substrate in the conventional art can also be solved.

To be noted, the other technical contents of the manufacturing method of a curved structure of this disclosure can be referred to the above embodiments, so the detailed descriptions thereof will be omitted.

As mentioned above, the curved structure, the manufacturing method thereof, and the display device of the embodiments of the present disclosure have the following advantages: 1. The problem of poor optical uniformity caused by direct coating (e.g., the functional layer) on a curved cover (e.g., a curved glass) in the conventional process can be improved. 2. The problem of poor printing accuracy of the optical film formed on the vision area can be improved. 3. The problem of the chromatic aberration phenomenon caused by the uneven thickness of the optical film can be improved. 4. Because the decorative layer is formed on the planar surface (such as by printing), the thickness of the ink can be easily controlled, which can solve the problem of the uncontrollable thickness of the decoration layer on the curved substrate or the problem of printing the decoration layer on the curved substrate in the conventional process. 5. Multiple sets of patterns of the decoration layer can be formed (by printing) by one process, thereby increasing the production throughput and reducing the manufacturing cost. 6. Since the decoration layer is made by the low-temperature ink, the energy consumption can be reduced and the reliability can be increased. 7. Because the decoration layer can be completely covered by the adhesion layer, the scratch problem can be prevented. 8. Compared with the conventional process, since the special jig for fixing the flexible substrate and the curved substrate is not needed, the manufacturing process becomes simpler, and the process yield can be greatly improved, thereby reducing the production cost. 9. When light is provided on the junction of the flexible substrate and the decoration layer of the curved structure of this disclosure, a better optical effect can be obtained, thereby providing the viewer a good viewing experience.

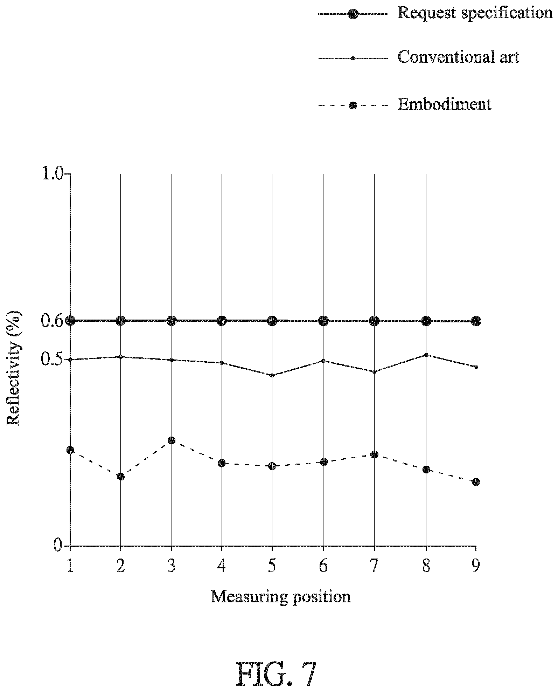

FIG. 7 is a schematic diagram showing the optical characteristics of the curved structure according to an embodiment of this disclosure, wherein the horizontal coordinate represents different measuring positions on the planar area (e.g., the first area A1) of the curved structure, and the vertical coordinate represents the reflectivity (%). As shown in FIG. 7, in some embodiments, the reflectivities measured at different measuring positions on the planar area of the curved structure of this disclosure have very high uniformity, and they are also lower than the request specification (e.g., 0.6%). In addition, the reflectivities of this embodiment are lower than those of the conventional process that directly forms the decoration layer on the glass cover. In some embodiments, the optical characteristics in the planar area and the curved area of the curved structure of this disclosure all have very good uniformity, and the reflectivities for the light having a wavelength between 450 nm and 650 nm are all less than 1%.

In summary, in the curved structure, the manufacturing method thereof, and the display device of this disclosure, a decoration layer is formed on the flexible substrate, and the flexible substrate is disposed on the curved substrate, so that the decoration layer can be located between the flexible substrate and the curved substrate. Compared with the conventional art, the curved structure, the manufacturing method thereof, and the display device of this disclosure can solve the problem of the uncontrollable thickness of the decoration layer formed on the curved substrate by printing.

In one embodiment of this disclosure, the curved structure, the manufacturing method thereof, and the display device of this disclosure can further solve the chromatic aberration phenomenon caused by the non-uniform optical film formed on the curved substrate in the conventional art.

Although the disclosure has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the disclosure.

## Claims

1. A curved structure, comprising:
a curved substrate;
a flexible substrate; and
a decoration layer located between the flexible substrate and the curved substrate.

2. The curved structure of claim 1, wherein the curved substrate has an inner surface and an outer surface corresponding to the inner surface, the flexible substrate is disposed on the outer surface, the decoration layer is located on a second area of the flexible substrate, an area of the flexible substrate other than the second area is defined as a first area, a thickness of the decoration layer is greater than or equal to 5 µm and is less than or equal to 10 µm, a reflectivity of the first area is between 0.3% and 2%, and a reflectivity of the second area is between 0.5% and 2.5%.

3. The curved structure of claim 1 or 2, wherein the flexible substrate is a PMMA (polymethyl methacrylate) substrate, a PET (polyethylene terephthalate) substrate, a TAC (triacetyl cellulose) substrate, or a SRF (super retardation film).

4. The curved structure of one of the preceding claims, further comprising:
a functional layer disposed on a surface of the flexible substrate away from the decoration layer, wherein the functional layer is an anti-glare film, an anti-reflection film, an anti-finger printing film, a waterproof and anti-fouling film, or an anti-scratch film.

5. The curved structure of one of the preceding claims, further comprising:
a second adhesion layer disposed between the flexible substrate and the curved substrate, wherein a thickness of the second adhesion layer is greater than or equal to 25 µm and is less than or equal to 150 µm.

6. The curved structure of claim 1, wherein the curved substrate is a C-shaped curved substrate, an S-shaped curved substrate, a V-shaped curved substrate, a Z-shaped curved substrate, or a J-type curved substrate, and a radius of curvature of the curved substrate is greater than or equal to 10 mm.

7. A display device, comprising:
a display module;
a curved structure according to one of claims 1 to 6; and
a first adhesion layer disposed between the display module and the curved structure.

8. The display device of claim 7, further comprising:
a touch pattern layer disposed on a surface of the curved substrate facing the display module.

9. The display device of claim 7, wherein the display module comprises a touch panel and a display panel, and the touch panel is disposed between the curved structure and the display panel.

10. The display device of one of claims 7 to 9, wherein the curved structure further comprises a functional layer disposed on a surface of the flexible substrate away from the decoration layer, the curved structure further comprises a second adhesion layer disposed between the flexible substrate and the curved substrate, the second adhesion layer covers parts of surfaces of the decoration layer and the flexible substrate, a thickness of the second adhesion layer is greater than or equal to 25 µm and is less than or equal to 150 µm, and the display module is an LCD (liquid crystal display) module or an EL (electroluminescence) display panel.

11. The display device of claim 10, wherein the flexible substrate is a PMMA (polymethyl methacrylate) substrate, a PET (polyethylene terephthalate) substrate, a TAC (triacetyl cellulose) substrate, or a SRF (super retardation film), the functional layer is an anti-glare film, an anti-reflection film, an anti-finger printing film, a waterproof and anti-fouling film, or an anti-scratch film, the curved substrate is a C-shaped curved substrate, an S-shaped curved substrate, a V-shaped curved substrate, a Z-shaped curved substrate, or a J-type curved substrate, and a radius of curvature of the curved substrate is greater than or equal to 10 mm.

12. A manufacturing method of a curved structure, comprising:
providing a flexible substrate and forming a decoration layer on the flexible substrate; and
providing a curved substrate and disposing the flexible substrate on the curved substrate, wherein the decoration layer is located between the flexible substrate and the curved substrate.

13. The manufacturing method of claim 12, wherein the curved substrate has an inner surface and an outer surface corresponding to the inner surface, the flexible substrate is disposed on the outer surface, the decoration layer is located on a second area of the flexible substrate, an area of the flexible substrate other than the second area is defined as a first area, the manufacturing method further comprises disposing a second adhesion layer between the flexible substrate and the curved substrate, the manufacturing method further comprises disposing a functional layer on a surface of the flexible substrate away from the decoration layer, and the functional layer is an anti-glare film, an anti-reflection film, an anti-finger printing film, a waterproof and anti-fouling film, or an anti-scratch film.

14. The manufacturing method of claim 12 or 13, wherein the decoration layer is formed by screen printing, spraying, or transferring, the decoration layer further comprises a plurality of adjacent patterns, forming the decoration layer comprising forming baking at a baking temperature between 80 °C and 120 °C, and disposing the flexible substrate on the curved substrate comprises attaching the flexible substrate to the curved substrate by a roller process.
